# EUROPEAN PATENT APPLICATION

(11) **EP 3 473 838 A1**
(43) Date of publication of application: **24.04.2019**
(21) Application number: 17203496.9
(22) Date of filing: 24.11.2017
(51) Int. Cl.: F02D 41/00, F02D 13/02

(54) **ENGINE SYSTEM**

(30) Priority: 18.10.2017 KR 20170135393
(71) Applicant: Hyundai Motor Company, Seoul 137-938 (KR); Kia Motors Corporation, Seoul (KR)
(72) Inventor: PARK, Jong Il, 18280 Hwaseong-si, Gyeonggi-do (KR); HAN, Dong Hee, 18280 Hwaseong-si, Gyeonggi-do (KR); HWANG, Il Joong, 18280 Hwaseong-si, Gyeonggi-do (KR); LEE, Hyungbok, 18280 Hwaseong-si, Gyeonggi-do (KR); HONG, Seungwoo, 18280 Hwaseong-si, Gyeonggi-do (KR); JOO, Nahm Roh, 18280 Hwaseong-si, Gyeonggi-do (KR); LIM, Hyun Jun, 18280 Hwaseong-si, Gyeonggi-do (KR)
(74) Representative: Viering, Jentschura & Partner mbB Patent- und Rechtsanwälte

(57) **Abstract**

An engine system may include: an engine including a first cylinder bank and a second cylinder bank; a variable valve apparatus mounted on the cylinder of the first cylinder bank to selectively deactivate the cylinder and changing operation phases of an intake valve and an exhaust valve; a main exhaust line to which a first exhaust line in which the exhaust gas from the cylinder of the first cylinder bank flows and a second exhaust line in which the exhaust gas from the cylinder of the second cylinder bank flows are joined; and a controller configured for controlling the cylinder of the first cylinder bank to be deactivated according to operation range of an engine, and the exhaust gas from the cylinder of the second cylinder bank to be re-circulated from the second exhaust line to the intake manifold through the first exhaust line and the cylinder of the first cylinder bank.

## Description

### CROSS-REFERENCE TO RELATED APPLICATION

The present application claims priority to Korean Patent Application No. 10-2017-0135393 filed on October 18, 2017, the entire contents of which is incorporated herein for all purposes by this reference.

### BACKGROUND OF THE INVENTION

### Field of the Invention

The present invention relates to an engine system, and more particularly, to an engine system for operating a cylinder in a deactivation state with a pump for exhaust gas re-circulation.

### Description of Related Art

Generally, nitrogen oxide (NOx) included in exhaust gas is a cause of acid rain, stimulates eyes and a respiratory organ, and kills plant. The NOx is regulated as major air pollutants, and many studies are under way to reduce the NOx emission.

An exhaust gas recirculation (EGR) system is mounted in a vehicle to reduce noxious exhaust gas. Generally, the NOx emission is increased when combustion is good due to a high proportion of air in a mixer. Accordingly, the EGR system again mixes a part (e.g., 5 to 20 %) of the exhaust gas emitted from an engine in the mixer to reduce an oxygen amount in the mixer and disturb combustion, suppressing the NOx emission.

The general exhaust gas recirculation system re-circulates the exhaust gas, which is exhausted from a cylinder of the engine through an exhaust manifold and flows into an exhaust line, to the cylinder of the engine through a recirculation line and adjusts an EGR rate by mounting an EGR valve in the recirculation line.

The EGR system is classified into a low pressure EGR (LP EGR) and a high pressure EGR (HP EGR).

The existing EGR system re-circulates the exhaust gas through an EGR line which is branched from the exhaust line in which the exhaust gas flows and is coupled to an intake line. At the present time, an EGR cooler that cools the exhaust gas re-circulated in the EGR line and the EGR valve that adjusts the re-circulated exhaust gas amount are disposed in the EGR line.

Accordingly, since the related art may include a separate EGR system for exhaust gas recirculation, manufacturing cost of a vehicle may be increased and freedom of design of an internal to an engine compartment may be reduced.

The information disclosed in this Background of the Invention section is only for enhancement of understanding of the general background of the invention and may not be taken as an acknowledgement or any form of suggestion that this information forms the related art already known to a person skilled in the art.

### BRIEF SUMMARY

Various aspects of the present invention are directed to providing an engine system having advantages of re-circulating exhaust gas without a separate exhaust gas recirculation system.

Various aspects of the present invention are directed to providing an engine system including: an engine including a first cylinder bank and a second cylinder bank that may include a plurality of cylinders generating a driving torque by combusting fuel and an intake manifold which is disposed at a center of the first cylinder bank and the second cylinder bank; a variable valve apparatus mounted on the cylinder of the first cylinder bank to selectively deactivate the cylinder and changing operation phases of an intake valve and an exhaust valve; a main exhaust line to which a first exhaust line in which the exhaust gas from the cylinder of the first cylinder bank flows and a second exhaust line in which the exhaust gas from the cylinder of the second cylinder bank flows are joined; and a controller configured for controlling the cylinder of the first cylinder bank to be deactivated according to an operation range of an engine, and the exhaust gas from the cylinder of the second cylinder bank to be re-circulated from the second exhaust line to the intake manifold through the first exhaust line and the cylinder of the first cylinder bank.

The controller may open the exhaust valve of the cylinder of the deactivated first cylinder bank during an intake stroke of the engine and open the intake valve of the cylinder of the deactivated first cylinder bank during an exhaust stroke of the engine to re-circulate the exhaust gas to the activated cylinder.

The controller may be configured to control a re-circulated exhaust gas amount by controlling an operating time, a lift, or a duration of the intake valve and the exhaust valve by the variable valve apparatus.

The controller may deactivate the cylinder of the first cylinder bank by the variable valve apparatus when the operation range is a low load area and re-circulate the exhaust gas to the cylinder of the activated second cylinder bank through the cylinder of the deactivated first cylinder bank.

The engine system may further include: a first turbocharger including a first turbine rotating by the exhaust gas flowing into the first exhaust line and a first compressor rotating by interlocking to the first turbine to compress external air; and a second turbocharger including a second turbine rotating by the exhaust gas flowing into the second exhaust line and a second compressor rotating by interlocking to the first turbine to compress the external air.

The intake manifold may be integrally formed with a water cooling type intercooler.

The engine system may further include: a first exhaust gas purifying device disposed in the first exhaust line; a second exhaust gas purifying device disposed in the second exhaust line; and a main exhaust gas purifying device disposed in the main exhaust line.

The engine system may further include: an exhaust control valve disposed at a point to which the first exhaust line, the second exhaust line and the main exhaust line are joined.

According to an exemplary embodiment of the present invention, the engine system can re-circulate the exhaust gas from the cylinder of the activated cylinder bank in the multi-bank engine through the cylinder of the deactivated cylinder bank by the CDA apparatus.

Furthermore, it is possible to improve the fuel consumption of the vehicle by reducing the pumping loss in the low load operation range.

Furthermore, it is possible to prevent the catalytic temperature disposed in the exhaust line connected to the deactivated cylinder from falling by re-circulating the exhaust gas from the cylinders of any one cylinder bank to the cylinder of another cylinder bank through the exhaust line and improve the cleaning efficiency by the catalyst by reducing the time taken for the catalyst to reach the activation temperature when the deactivated cylinder is activated.

Furthermore, according to an exemplary embodiment of the present invention, since there is no need to install the separate exhaust gas recirculation system, the manufacturing cost of the vehicle can be reduced and the volume of the engine can be reduced.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a diagram schematically illustrating an engine system according to an exemplary embodiment of the present invention;

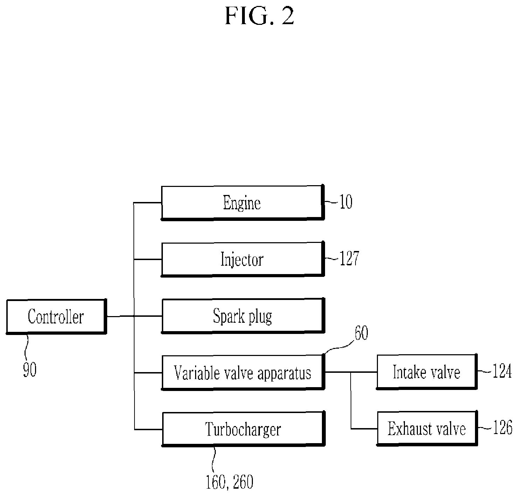

FIG. 2 is a diagram illustrating a configuration of an engine control apparatus having a variable valve apparatus according to an exemplary embodiment of the present invention;
FIG. 3, FIG. 4, FIG. 5 and FIG. 6 are schematic views for explaining an operation of the engine control apparatus having a variable valve apparatus according to an exemplary embodiment of the present invention; and
FIG. 7 is a diagram schematically illustrating an engine system according to another exemplary embodiment of the present invention.

It may be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particularly intended application and use environment.

In the figures, reference numbers refer to the same or equivalent parts of the present invention throughout the several figures of the drawing.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that the present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

Accordingly, the drawings and description are to be regarded as illustrative in nature and not restrictive. Like reference numerals designate like elements throughout the specification.

Since sizes and thicknesses of the respective components were arbitrarily shown in the accompanying drawings for convenience of explanation, the present invention is not limited to contents shown in the accompanying drawings. Furthermore, thicknesses were exaggerated to obviously represent several portions and regions.

Hereinafter, an engine system according to an exemplary embodiment of the present invention will be described more specifically with reference to the accompanying drawings.

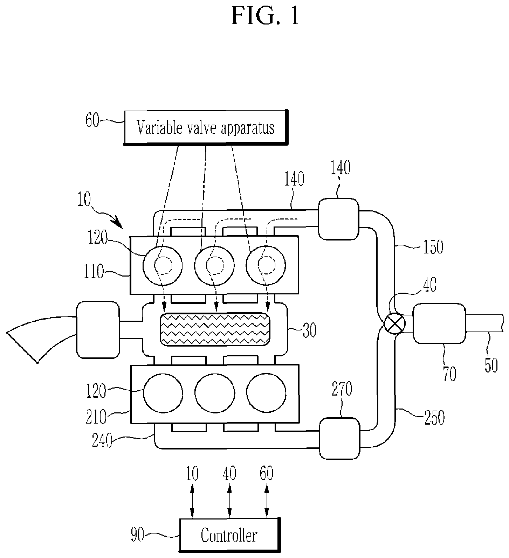

FIG. 1 is a diagram schematically illustrating an engine system according to an exemplary embodiment of the present invention.

As illustrated in FIG 1, an engine system according to an exemplary embodiment of the present invention includes an engine 10 including a plurality of cylinder banks that includes at least one cylinder generating a driving torque by combustion of fuel and a variable valve apparatus 60 disposed in any one of the plurality of cylinder banks.

The engine 10 and the variable valve apparatus 60 are operated by a control signal of a controller 90.

The plurality of cylinder banks of the engine 10 are divided into a first cylinder bank 110 and a second cylinder bank 210, and each of the cylinder banks includes at least one cylinder. A center of the first cylinder bank 110 and the second cylinder bank 210 is provided with an intake manifold 30 that distributes intake into cylinders of each cylinder bank.

The engine 10 may be a V-type engine in which the cylinders of the first cylinder bank 110 and the cylinders of the second cylinder bank 210 are distanced from each other by a predetermined angle (a°) (e.g., 60° to 120°) with respect to a crankshaft.

The respective cylinder banks may be a six-cylindered engine including three cylinders. However, the scope of the present invention is not limited thereto, and therefore the cylinder bank may also be implemented as an eight-cylindered engine or a twelve-cylindered engine.

An intake valve 124 is selectively opened / closed to supply air and fuel to the cylinder through the intake manifold 30. That is, the intake valve 124 is open during an intake stroke to supply air and fuel to the cylinder through the intake manifold 30 and is closed during an exhaust stroke.

The exhaust valve 126 is selectively opened / closed to exhaust the exhaust gas generated from the cylinder to the exhaust manifold. That is, the exhaust valve 126 is closed during the intake stroke, and opened during the exhaust stroke to exhaust the exhaust gas from the cylinder to the exhaust manifold.

The exhaust gas from the cylinder of the first cylinder bank 110 is expelled to a first exhaust line 150, and the exhaust gas from the cylinder of the second cylinder bank 210 is expelled to a second exhaust line 250. The first exhaust line 150 and the second exhaust line 250 are coupled to a main exhaust line 50.

The first exhaust line 150 is provided with a first exhaust gas purifying device 170, the second exhaust line 250 is provided with a second exhaust gas purifying device 270, and the main exhaust line 50 is provided with a main exhaust gas purifying device 70.

Here, the first exhaust gas purifying device 170 and the second exhaust gas purifying device 270 may be a gasoline particulate filter (GPF) that cleans particulate materials included in the exhaust gas, and the main exhaust gas purifying device 70 may be a three-way catalyst for removing nitrogen oxide.

Meanwhile, a point to which the first exhaust line 150, the second exhaust line 250 and the main exhaust line 50 are joined may be provided with an exhaust control valve 40. An exhaust gas amount exhausted from the first exhaust line 150 and the second exhaust line 250 to the main exhaust line 50 is controlled by an opening of the exhaust control valve 40. Furthermore, the exhaust gas amount re-circulated from the second exhaust line 250 through the first exhaust line 150 is controlled by the opening of the exhaust control valve 40. The exhaust control valve 40 is operated by a control signal of the controller 90 to be described later.

The variable valve apparatus 60 is disposed in any one (e.g., first cylinder bank 110) of the plurality of cylinder banks, and selectively deactivates the cylinder of the first cylinder bank 110 according to an operation range of the engine 10. Fuel is not supplied to the deactivated cylinder during the operation of the variable valve apparatus 60.

The opening / closing of the intake valve 124 and the exhaust valve 126 opens / closes the cylinder by a valve opening / closing mechanism connected to a camshaft, and the variable valve apparatus 60 lags or leads operation timing of the intake valve 124 and the exhaust valve 126 by the controller 90. Alternatively, the variable valve apparatus 60 controls a lift of the intake valve 124 and the exhaust valve 126 by the control of the controller 90. Alternatively, the variable valve apparatus 60 increases or reduces an opening time and a closing time (hereinafter, referred to as 'duration') of the intake valve 124 and the exhaust valve 126 by the control of the controller 90. That is, the variable valve apparatus 60 changes operation phases of the intake valve 124 and the exhaust valve 126.

In the specification of the present invention, the variable valve apparatus 60 includes a cylinder deactivation apparatus (CDA) that deactivates the cylinder, a variable valve lift apparatus that controls the lift of the valve, a variable valve timing apparatus that controls the operation timing of the valve, and a variable valve duration apparatus that controls the duration of the valve.

The controller 90 may operate the cylinder in a deactivation mode by controlling the variable valve apparatus 60 and an injector 127 injecting fuel.

The variable valve apparatus 60 is known to those skilled in the art to which the present invention pertains, and therefore a detailed description thereof will be omitted.

The controller 90 may be implemented as at least one processor operated by a predetermined program which executes each step of a method for controlling an engine system according to an exemplary embodiment of the present invention.

The controller 90 controls the cylinders of the first cylinder bank 110 to be deactivated by the variable valve apparatus 60 according to the operation range of the engine 10 and controls the exhaust gas from the cylinders of the activated second cylinder bank 210 to be re-circulated to the intake manifold 30 through the cylinders of the deactivated first cylinder bank 110.

That is, the operation of the engine, the operation of the variable valve apparatus 60, and the opening / closing of the intake valve 124 and the exhaust valve 126 are operated by the control signal of the controller 90.

The controller 90 deactivates the cylinders of the first cylinder bank 110 by the variable valve apparatus 60 and re-circulates the exhaust gas by the deactivated cylinder, when the operation range is a low-speed and low-load area. Since fuel is not injected to the cylinder in the state in which the cylinder is deactivated, some of the cylinders are deactivated in the low-speed and low-load area, improving fuel consumption and minimizing pumping loss.

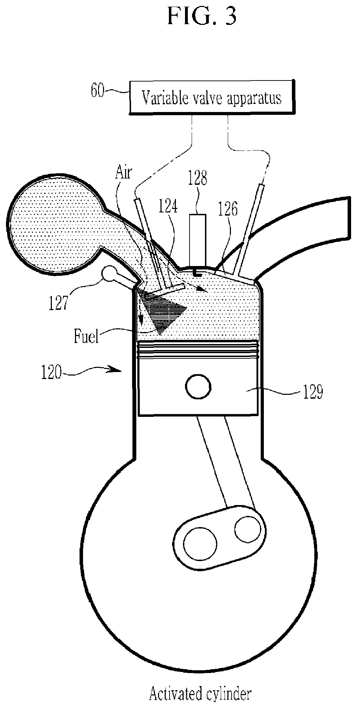

Referring to FIG. 3, FIG. 4, FIG. 5 and FIG. 6, a process of re-circulating exhaust gas in a deactivation mode in which some of the cylinders are deactivated will be described more specifically.

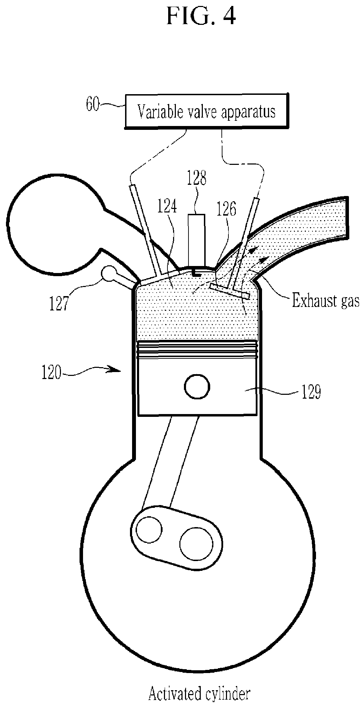

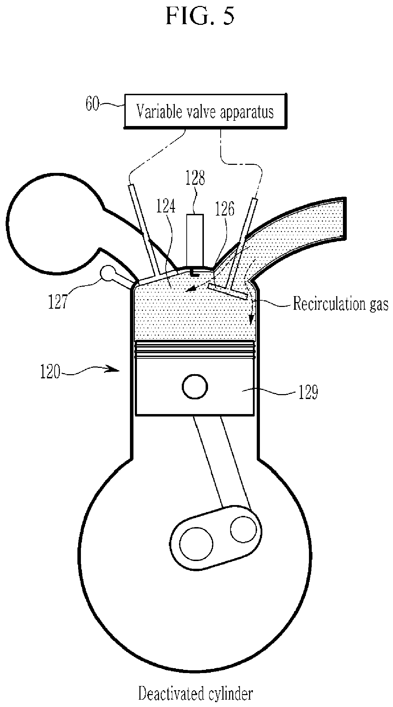

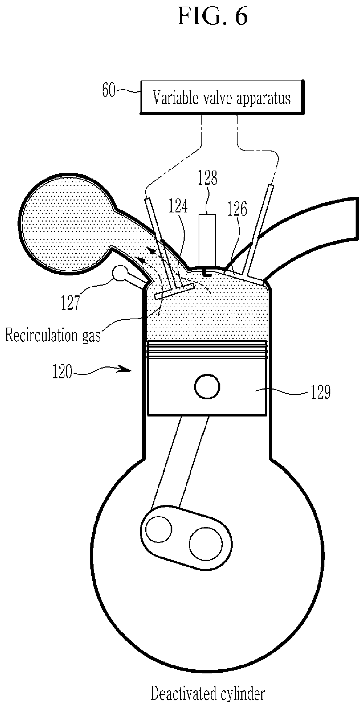

FIG. 3 illustrates the intake stroke of the activated cylinder in the deactivation mode, FIG. 4 illustrates the exhaust stroke of the activated cylinder in the deactivation mode, FIG. 5 illustrates the intake stroke of the deactivated cylinder in the deactivation mode, and FIG. 6 illustrates the exhaust stroke of the deactivated cylinder in the deactivation mode.

As illustrated in FIG. 3 and FIG. 4, the cylinders of the activated second cylinder bank 210 in the deactivation mode are operated normally. That is, the intake valve 124 is open during the intake stroke, so air flows into the cylinder and fuel is injected to the cylinder through the injector 127. Fuel is ignited by a spark plug 128 during a compression stroke. Hereinafter, the exhaust valve 126 is open during the exhaust stroke by passing through an explosion stroke, so that the exhaust gas emitted from the cylinder is discharged to the second exhaust manifold 240.

As illustrated in FIG. 5 and FIG. 6, air and fuel are not supplied to the cylinder of the deactivated first cylinder bank 110 in the deactivation mode, and the exhaust valve 126 is open and the intake valve 124 is closed by the variable valve apparatus 60 under the control of the controller 90 during the intake stroke. At the present time, the exhaust gas from the activated second cylinder bank 210 flows into the cylinder of the deactivated first cylinder bank 110.

That is, the exhaust gas from the cylinder of the activated second cylinder bank 210 flows into the cylinder of the deactivated first cylinder bank 110 via the second exhaust line 250, the first exhaust line 150 and the first exhaust manifold 140.

Since air and fuel are not injected in the cylinder of the deactivated first cylinder bank 110, the exhaust gas flowing into the deactivated cylinder is compressed during the compression stroke. The intake valve 124 is open and the exhaust valve 126 is closed by the variable valve apparatus 60 during the exhaust stroke. The exhaust gas flowing and compressed in the cylinder of the deactivated first cylinder bank 110 by opening the intake valve 124 is expelled to the intake manifold 30.

Next, the compressed exhaust gas flowing into the intake manifold 30 is supplied to the cylinder of the activated second cylinder bank 210. At the present time, the re-circulated exhaust gas amount may be controlled by the lift and the duration of the exhaust valve 126 and the opening of the exhaust control valve 40.

Merely, since the exhaust gas amount discharged from the second exhaust line 250 to the main exhaust line 50 is present, it is difficult to accurately control the re-circulated exhaust gas amount only by the lift and the duration of the intake valve 124 and the exhaust valve 126. The re-circulated exhaust gas amount can accurately be controlled by the opening of the exhaust control valve 40.

Since the exhaust gas from the cylinder of the activated second cylinder bank 210 in the deactivation mode is re-supplied to the cylinder of the activated second cylinder bank 210 through the cylinder of the deactivated first cylinder bank 110, the cylinder of the deactivated first cylinder bank 110 is configured as the exhaust gas recirculation system. When the cylinder of the deactivated first cylinder bank 110 re-circulates the exhaust gas, the deactivated cylinder is configured as a kind of pump.

In the present way, since the exhaust gas is re-circulated to the activated cylinder through the deactivated cylinder, very fast response performance appears when the exhaust gas is re-circulated.

In the engine system according to the exemplary embodiment of the present invention, the intake manifold 30 may be integrally formed with a water cooling type intercooler.

Accordingly, the water cooling type intercooler is integrally formed with the intake manifold 30, so the exhaust gas re-circulated through the cylinder of the deactivated first cylinder bank 110 is cooled while passing through the water cooling type intercooler-integrated intake manifold 30. That is, the water cooling type intercooler-integrated intake manifold 30 is configured as the existing EGR cooler.

Therefore, when the exhaust gas is re-circulated through the deactivated cylinder, since the exhaust gas exchanges heat with an engine coolant during the compression stroke and the explosion stroke which are the middle of the intake stroke and the exhaust stroke, the EGR gas may be cooled.

The engine system according to the exemplary embodiment of the present invention may further include a turbocharger that supplies charge air to the cylinder.

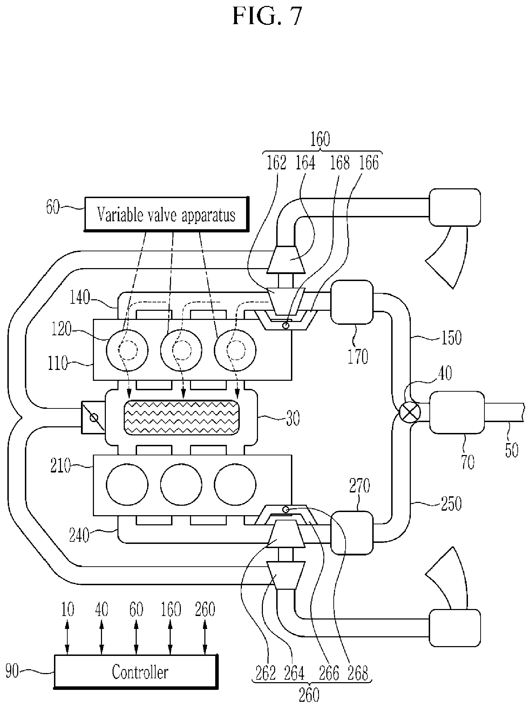

Referring to FIG 7, the turbocharger is for supplying the charge air to the cylinders and includes a first turbocharger 160 and a second turbocharger 260.

The first turbocharger 160 includes a first turbine 162 which is disposed in the first exhaust line 150 and rotates by the exhaust gas flowing into the first exhaust line 150 and a first compressor 164 which is disposed in the intake line and rotates by interlocking to the first turbine 162 to compress external air.

The first exhaust line 150 is provided with a first bypass line 166 that bypasses the first turbine 162, and the first bypass line 166 is provided with a first wastegate valve 168. A charge air amount supplied by the first turbocharger 160 is controlled by the opening of the first wastegate valve 168.

The second turbocharger 260 includes a second turbine 262 which is disposed in the second exhaust line 250 and rotates by the exhaust gas flowing into the second exhaust line 250 and a second compressor 264 which is disposed in the intake line and rotates by interlocking to the second turbine 262 to compress external air.

The second exhaust line 250 is provided with a second bypass line 266 that bypasses the second turbine 262, and the second bypass line 266 is provided with a second wastegate valve 268. A charge air amount supplied by the second turbocharger 260 is controlled by the opening of the second wastegate valve 268.

As described above, according to the exemplary embodiment of the present invention, since the exhaust gas from the cylinders of any one cylinder bank in the multi-bank engine is re-circulated to the cylinder of another cylinder bank through the exhaust line, the engine system can prevent the catalyst temperature of the exhaust gas purifying device disposed in the exhaust line from falling.

That is, if the cylinder of the deactivated cylinder bank is deactivated by the variable valve apparatus 60, the catalyst temperature of the exhaust gas purifying device disposed in the exhaust line connected to the deactivated cylinder falls. Next, if the deactivated cylinder is activated, the predetermined time for the catalyst to reach the activation temperature is required. Therefore, the cleaning efficiency by the exhaust gas purifying device is reduced for the time for which the catalyst is activated.

However, in the engine according to the exemplary embodiment of the present invention, it is possible to prevent the catalytic temperature disposed in the exhaust line connected to the deactivated cylinder from falling by re-circulating the exhaust gas from the cylinders of any one cylinder bank to the cylinder of another cylinder bank through the exhaust line, and improve the cleaning efficiency by the catalyst by reducing the time taken to reach the temperature at which the catalyst is activated when the deactivated cylinder is activated.

Furthermore, since the falling of the temperature of the deactivated cylinder can be prevented when the exhaust gas is re-circulated, it is possible to increase the combustion efficiency when the deactivated cylinder is activated.

Furthermore, according to the exemplary embodiment of the present invention, since there is no need to install the separate exhaust gas recirculation system, it is possible to save the manufacturing cost of the vehicle and reduce the volume of the engine.

For convenience in explanation and accurate definition in the appended claims, the terms "upper", "lower", "internal", "outer", "up", "down", "upper", "lower", "upwards", "downwards", "front", "rear", "back", "inside", "outside", "inwardly", "outwardly", "internal", "external", "internal", "outer", "forwards", and "backwards" are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described to explain certain principles of the invention and their practical application, to enable others skilled in the art to make and utilize various exemplary embodiments of the present invention, as well as various alternatives and modifications thereof. It is intended that the scope of the invention be defined by the Claims appended hereto and their equivalents.

## Claims

1. An engine system, comprising:
an engine including a first cylinder bank and a second cylinder bank that include a plurality of cylinders generating a driving torque by combusting fuel and an intake manifold which is disposed at a center of the first cylinder bank and the second cylinder bank;
a variable valve apparatus mounted on the cylinder of the first cylinder bank to selectively deactivate the cylinder and changing operation phases of an intake valve and an exhaust valve;
a main exhaust line to which a first exhaust line in which exhaust gas from the cylinder of the first cylinder bank flows and a second exhaust line in which exhaust gas from the cylinder of the second cylinder bank flows are joined; and
a controller configured for controlling the cylinder of the first cylinder bank to be deactivated according to an operation range of the engine, and the exhaust gas from the cylinder of the second cylinder bank to be re-circulated from the second exhaust line to the intake manifold through the first exhaust line and the cylinder of the first cylinder bank.

2. The engine system of claim 1, wherein the controller is configured to open the exhaust valve of the cylinder of the deactivated first cylinder bank during an intake stroke of the engine and opens the intake valve of the cylinder of the deactivated first cylinder bank during an exhaust stroke of the engine to re-circulate the exhaust gas to the activated cylinder.

3. The engine system of claim 1 or 2, wherein the controller is configured to control a re-circulated exhaust gas amount by controlling an operating time, a lift, or a duration of the intake valve and the exhaust valve by the variable valve apparatus.

4. The engine system of any one of claims 1 to 3, wherein the controller is configured to deactivate the cylinder of the first cylinder bank by the variable valve apparatus when the operation range is a low load area and re-circulates the exhaust gas to the cylinder of the activated second cylinder bank through the cylinder of the deactivated first cylinder bank.

5. The engine system of any one of claims 1 to 4, further including:
a first turbocharger including a first turbine rotating by the exhaust gas flowing into the first exhaust line and a first compressor rotating by interlocking to the first turbine to compress external air; and
a second turbocharger including a second turbine rotating by the exhaust gas flowing into the second exhaust line and a second compressor rotating by interlocking to the first turbine to compress the external air.

6. The engine system of any one of claims 1 to 5, wherein
the intake manifold is integrally formed with a water-cooling intercooler.

7. The engine system of any one of claims 1 to 6, further including:
a first exhaust gas purifying device disposed in the first exhaust line;
a second exhaust gas purifying device disposed in the second exhaust line; and
a main exhaust gas purifying device disposed in the main exhaust line.

8. The engine system of any one of claims 1 to 7, further including:
an exhaust control valve disposed at a point to which the first exhaust line, the second exhaust line and the main exhaust line are joined.
